# EUROPÄISCHE PATENTANMELDUNG

(11) **EP 4 458 747 A1**
(43) Veröffentlichungstag der Anmeldung: **06.11.2024**
(21) Anmeldenummer: 23171557.4
(22) Anmeldetag: 04.05.2023
(51) Int. Cl.: B65G 54/02, B65G 65/00

(54) **AUFNAHMEVORRICHTUNG ZUM TRANSPORT VON OBJEKTEN UND KOMBINATION EINER DERARTIGEN AUFNAHMEVORRICHTUNG MIT EINER HILFSVORRICHTUNG**

(71) Anmelder: SOMIC Verpackungsmaschinen GmbH & Co. KG, 83123 Amerang (DE)
(72) Erfinder: KÖGEL, Christoph, 83134 Prutting (DE)
(74) Vertreter: Weickmann & Weickmann PartmbB

(57) **Zusammenfassung**

Die Erfindung betrifft eine Aufnahmevorrichtung (100) für den Transport von Objekten (O), wobei die Aufnahmevorrichtung (100) eine Basiseinheit (110) mit einem Bodenabschnitt (112) und zwei Wandabschnitten (114, 116) umfasst. Erfindungsgemäß umfasst die Aufnahmevorrichtung (100) ferner eine Kippeinheit (120) umfasst, die an der Basiseinheit (110) mittels eines Kippscharniers (102) um eine Kippachse (K) zwischen einer liegenden Kippstellung und einer stehenden Kippstellung kippbar angelenkt ist, wobei die Kippeinheit (120) einen Stützabschnitt (122) umfasst, der sich in der liegenden Stellung im Wesentlichen parallel zum Bodenabschnitt (112) der Basiseinheit (110) erstreckt, sowie zwei Halteabschnitte (124, 126), die sich unabhängig von der jeweiligen Kippstellung im Wesentlichen orthogonal zu den Wandabschnitten (114, 116) der Basiseinheit (110) erstrecken. Die Erfindung betrifft ferner eine Kombination einer derartigen Aufnahmevorrichtung (100) mit einer Hilfsvorrichtung (200), welche vorzugsweise als Entnahmevorrichtung ausgebildet ist.

## Beschreibung

Die Erfindung betrifft eine Aufnahmevorrichtung für den Transport wenigstens eines nicht zur Aufnahmevorrichtung gehörenden Objekts, wobei die Aufnahmevorrichtung eine Basiseinheit umfasst mit einem Bodenabschnitt, dessen Unterseite zur Befestigung auf einem nicht zur Aufnahmevorrichtung gehörenden Mover einer ebenfalls nicht zur Aufnahmevorrichtung gehörenden Fördervorrichtung vorbereitet ist, sowie zwei Wandabschnitten, die von zwei einander gegenüberliegenden Seitenrändern des Bodenabschnitts ausgehend von einer von der Unterseite des Bodenabschnitts abgewandten Seite des Bodenabschnitts abstehen.

Aus der zum Zeitpunkt der Einreichung der vorliegenden Anmeldung noch nicht veröffentlichten internationalen Patentanmeldung PCT/EP2022/067894 der Anmelderin ist es bekannt, dass auf einem Mover einer in Magnetschwebetechnologie ausgebildeten Vorrichtung eine Aufnahme angebracht sein kann, die dazu geeignet ist, mit wenigstens einem Objekt beladen zu werden. Wie das wenigstens eine Objekt wieder aus der Aufnahme entnommen werden kann, lässt die PCT/EP2022/067894 hingegen offen.

Aus der zum Zeitpunkt der Einreichung der vorliegenden Anmeldung noch nicht veröffentlichten europäischen Patentanmeldung Nr. 25 153 079.1 der Anmelderin ist eine Verbindungsanordnung zum Befestigen einer Aufnahmevorrichtung auf einem Mover bekannt.

Aus der US 2020/0030995 A1 ist ganz allgemein eine in Magnetschwebetechnologie ausgebildete Vorrichtung bekannt.

Aufgabe der Erfindung ist es, eine Aufnahmevorrichtung bereitzustellen, die auf einfache Weise entladen werden kann und zudem die stehende Abgabe von liegend in die Aufnahmevorrichtung eingebrachten Objekten ermöglicht.

Diese Aufgabe wird erfindungsgemäß durch eine Aufnahmevorrichtung der eingangs genannten Art gelöst, welche ferner eine Kippeinheit umfasst, die an der Basiseinheit mittels eines Kippscharniers um eine Kippachse zwischen einer liegenden Kippstellung und einer stehenden Kippstellung kippbar angelenkt ist, welche im Wesentlichen orthogonal zu den Wandabschnitten der Basiseinheit verläuft, wobei die Kippeinheit einen Stützabschnitt umfasst, der sich in der liegenden Stellung im Wesentlichen parallel zum Bodenabschnitt der Basiseinheit erstreckt, sowie zwei Halteabschnitte, die sich unabhängig von der jeweiligen Kippstellung im Wesentlichen orthogonal zu den Wandabschnitten der Basiseinheit erstrecken. Befindet sich die Kippeinheit in ihrer liegenden Kippstellung, so bildet sie zusammen mit der Basiseinheit eine schalenförmige, nach oben offene Aufnahme, in die die zu transportierenden Objekte liegend eingebracht und übereinander gestapelt werden können. Zum Entladen der Aufnahmevorrichtung kann die Kippeinheit in ihre stehende Kippstellung übergeführt werden. Dadurch werden die Objekte aufgerichtet und können mittels eines Greifers erfasst und aus der Aufnahmevorrichtung entnommen werden.

Um die Kippeinheit in einfacher Weise aus der liegenden Kippstellung in die stehende Kippstellung überführen zu können, wird vorgeschlagen, dass an einem freien Ende des von der Kippachse entfernt angeordneten Halteabschnitts ein Eingriffselement vorgesehen ist. Mit diesem Eingriffselement kann ein Gegeneingriffselement einer nicht zur Aufnahmevorrichtung gehörenden Hilfsvorrichtung in Eingriff treten, so dass die Überführung der Kippeinheit aus der liegenden Kippstellung in die stehende Kippstellung durch eine Relativbewegung der Hilfsvorrichtung und der Aufnahmevorrichtung herbeiführt werden kann.

Um verhindern zu können, dass die Objekte in der stehenden Kippstellung der Kippeinheit aus der Kippeinheit herausfallen können, kann die Hilfsvorrichtung eine Anlageeinheit umfassen, welche an der Hilfsvorrichtung um eine Schwenkachse schwenkbar angelenkt und dazu ausgebildet und bestimmt ist, nach der Herstellung des Eingriffs zwischen dem Eingriffselement der Aufnahmevorrichtung und dem Gegeneingriffselement der Hilfsvorrichtung, sich von oben an das in der Aufnahmevorrichtung aufgenommene Objekt oder den in der Aufnahmevorrichtung aufgenommenen Objektstapel anzulegen und diese Anlage während des Kippens der Kippeinheit durch an das Kippen angepasstes Verschwenken um die Schwenkachse aufrechtzuerhalten.

Um auch eine rückseitige Anlage an dem Objekt oder dem Objektstapel ermöglichen zu können, wird in Weiterbildung der Erfindung vorgeschlagen, dass die Kippeinheit wenigstens eine Durchbrechung, vorzugsweise wenigstens zwei Durchbrechungen, aufweist, welche von einem freien Ende des von der Kippachse entfernt angeordneten Halteabschnitts ausgeht und sich bis in den Stützabschnitt erstreckt, vorzugsweise bis zu einem der Kippachse benachbarten Ende des Stützabschnitts. Durch diese wenigstens eine Durchbrechung kann sich eine weitere Anlageeinheit der Hilfsvorrichtung hindurchbewegen und gegen das Objekt oder den Objektstapel anlegen.

Durch Zusammenwirken der beiden Anlageeinheiten kann die Hilfsvorrichtung die Funktion einer Entnahmevorrichtung übernehmen, welche das Objekt oder den Objektstapel mittels der beiden Anlageeinheiten ergreift und aus der Kippeinheit herausbewegt.

Um eine Rückführung der Kippeinheit in die liegende Kippstellung bewerkstelligen zu können, kann vorgesehen sein, dass dem Kippscharnier eine Rückstellfeder, beispielsweise eine Drehfeder, oder ein pneumatisches und/oder elektromotorisches Kraftgerät zugeordnet ist. Grundsätzlich kann die Kippeinheit aber auch von Hand in die liegende Kippstellung zurückgeführt werden.

Um das Objekt oder das unterste Objekt eines Objektstapels in der liegenden Kippstellung der Kippeinheit vollflächig unterstützen zu können, wird vorgeschlagen, dass der Bodenabschnitt der Basiseinheit an einer zu der wenigstens einen Durchbrechung der Kippeinheit korrespondierenden Stelle eine Stützrippe aufweist, welche in der liegenden Kippstellung der Kippeinheit die wenigstens eine Durchbrechung im Wesentlichen ausfüllt.

Gemäß einem weiteren Aspekt betrifft die Erfindung ferner eine Kombination einer Aufnahmevorrichtung und einer Hilfsvorrichtung. Bezüglich der mit dieser Kombination erzielbaren Vorteile sei auf die vorstehende Erläuterung der Aufnahmevorrichtung und ihres Zusammenwirkens mit der Hilfsvorrichtung verwiesen.

Die Erfindung wird im Folgenden anhand von Ausführungsbeispielen mit Bezug auf die begleitenden Zeichnungen näher erläutert werden. Es stellt dar:
- Figur 1: eine perspektivische Ansicht einer erfindungsgemäßen Aufnahmevorrichtung im Zusammenwirken mit einer als Entnahmevorrichtung ausgebildeten Hilfsvorrichtung; und
- Figuren 2 bis 5: schematische Darstellungen zur Erläuterung des Ablaufs des Entladens der erfindungsgemäßen Aufnahmevorrichtung unter Verwendung der Entnahmevorrichtung.

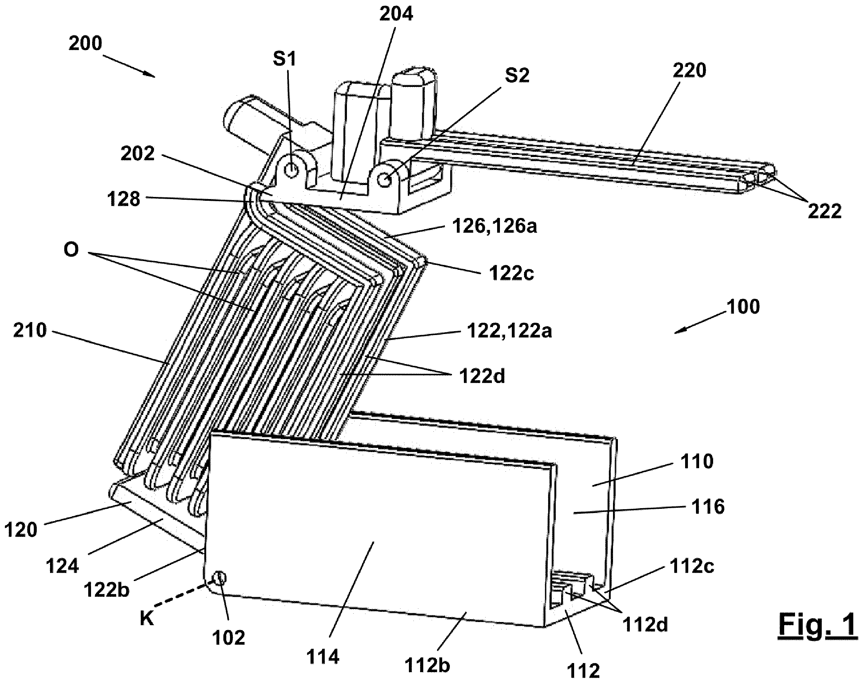

In Figur 1 sind eine erfindungsgemäße Aufnahmevorrichtung ganz allgemein mit 100 und eine erfindungsgemäße Hilfsvorrichtung ganz allgemein mit 200 bezeichnet.

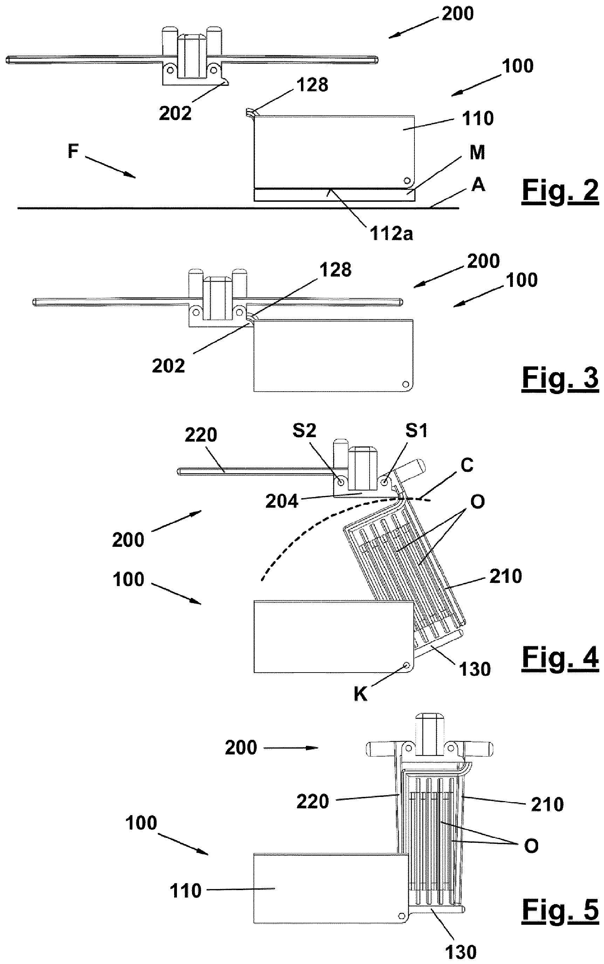

Die Aufnahmevorrichtung 100 umfasst eine Basiseinheit 110 und eine Kippeinheit 120, welche an der Basiseinheit 110 mittels eines Kippscharniers 102 um eine Kippachse K zwischen einer liegenden Kippstellung (siehe Figuren 2 und 3) und einer stehenden Kippstellung (siehe Figur 5) kippbar angelenkt ist. In Figur 1 ist die Kippeinheit 120 in einer Zwischenkippstellung dargestellt (siehe auch Figur 4).

Die Basiseinheit 110 umfasst einen in dem dargestellten Ausführungsbeispiel im Wesentlichen rechteckig ausgebildeten Bodenabschnitt 112. Eine Unterseite 112a des Bodenabschnitts ist zur Verbindung mit einem Mover M (siehe Figur 2) einer, beispielsweise in Magnetschwebetechnologie ausgebildeten, Fördervorrichtung F vorbereitet, mittels dessen die Aufnahmevorrichtung 100 längs einer Arbeitsfläche A der Fördervorrichtung F bewegt werden kann, um Objekte O (siehe Figur 1) von einer vorbestimmten Aufnahmeposition zu einer vorbestimmten Abgabeposition zu transportieren.

Die Basiseinheit 110 umfasst ferner zwei Wandabschnitte 114, 116, welche von zwei Längsrändern 112b, 112c des Bodenabschnitts der Basiseinheit 110 nach oben abstehen.

Die Kippeinheit 120 umfasst einen Stützabschnitt 122, der, wie nachstehend noch näher erläutert werden wird, in dem dargestellten Ausführungsbeispiel von drei Stützstreben 122a gebildet ist, sowie zwei Halteabschnitte 124, 126, die von den beiden Kurzseiten 122b, 122c des Stützabschnitts 122 nach oben abstehen. Während der Halteabschnitt 124, der an der dem Kippscharnier 102 zugewandten Seite des Stützabschnitts 122 angeordnet ist, vollflächig ausgebildet ist, ist der gegenüberliegende Halteabschnitt 126 von drei Haltestreben 126a gebildet, die mit den Stützstreben 122a einstückig, jedoch zu diesen im Wesentlichen orthogonal verlaufend ausgebildet sind.

In ihrer liegenden Kippstellung bildet die Kippeinheit 120 zusammen mit der Basiseinheit 110 eine nach oben offene Schale, in welche die Objekte O eingebracht werden können.

An dieser Stelle sei noch darauf hingewiesen, dass der Bodenabschnitt 112 der Basiseinheit 110 zwei Stützleisten 112d aufweist, welche in der liegenden Kippstellung der Kippeinheit 120 in die Durchbrechungen 122d zwischen den Stützstreben 122a eingreifen und so zusammen mit den Stützstreben 122a eine im Wesentlichen vollflächige Stützfläche für die Objekte O bilden.

Um die Objekte O stehend entladen zu können, ist es erforderlich, die Kippeinheit 120 aus ihrer liegenden Kippstellung gemäß Figuren 2 und 3 in ihre stehende Kippstellung gemäß Figur 5 überführen zu können. Hierzu ist an der Kippeinheit 120, genauer gesagt an den freien Enden der Haltestreben 126a, ein, genauer gesagt jeweils ein, Eingriffselement 128 angeordnet, welches dazu ausgebildet und bestimmt ist, mit einem Gegeneingriffselement 202 einer Grundplatte 204 der Hilfsvorrichtung 200 in Eingriff zu treten.

Zur Vorbereitung der weiteren Erläuterung sei angemerkt, dass die Hilfsvorrichtung 200, obgleich dies in den Figuren nicht gezeigt ist, mittels einer Verstellvorrichtung, beispielsweise eines Roboterarms, bewegt werden kann.

Befindet sich die Aufnahmevorrichtung 100 gemäß Figur 2 auf der Arbeitsfläche A in einer vorbestimmten Entladeposition, so kann die Hilfsvorrichtung 200 derart an die Aufnahmevorrichtung 100 heranbewegt werden, dass das Gegeneingriffselement 202 der Hilfsvorrichtung 200 mit dem Eingriffselement 128 der Aufnahmevorrichtung 100 in Eingriff tritt (Situation gemäß Figur 3).

Anschließend wird die Hilfsvorrichtung 200 längs einer Kreisbahn C um die Kippachse A der Kippeinheit 120 bewegt, wodurch die Kippeinheit 120 aus der Basiseinheit 110 der Aufnahmevorrichtung 100 gehoben und um die Kippachse A verkippt wird. Da sowohl das Eingriffselement 128 als auch das Gegeneingriffselement 202 mit jeweiligen kreiszylindrischen Flächen aneinander anliegen, gleiten sie dabei störungsfrei aneinander ab.

Wie in den Figuren dargestellt ist, weist die Hilfsvorrichtung 200 eine erste Anlageeinheit 210 auf, die an der Grundplatte 204 der Hilfsvorrichtung um eine im Wesentlichen horizontal verlaufende Schwenkachse S1 schwenkbar angelenkt ist. Um verhindern zu können, dass die Objekte O im Zuge des Verkippens der Kippeinheit 120 aus der Aufnahmevorrichtung 100 herausfallen können, kann die erste Anlageeinheit 210 derart verschwenkt werden, dass sie sich an das oberste Objekt O anlegt (siehe Figuren 1 und 4) und dieses somit in der Aufnahmevorrichtung 100 sichert.

Ferner weist die Hilfsvorrichtung 200 eine zweite Anlageeinheit 220 auf, die an der Grundplatte 204 der Hilfsvorrichtung um eine im Wesentlichen horizontal verlaufende Schwenkachse S2 schwenkbar angelenkt ist. Diese zweite Anlageeinheit weist zwei Anlagezinken 222 auf (siehe Figur 1), die derart ausgebildet und angeordnet sind, dass sie zwischen die Stützstreben 122d und Haltestreben 126a eintauchen und sich zwischen diesen hindurchbewegen können.

Hat die Kippeinheit 120 die stehende Stellung gemäß Figur 5 erreicht, so kann auch die zweite Anlageeinheit 220 verschwenkt werden, und zwar derart, dass sie sich gegen das unterste Objekt O anlegt (siehe Figur 4).

Üben die beiden Anlageeinheiten 210, 220 auf die Objekte O einen ausreichend starken seitlichen Druck aus, so können sie die Objekte O ergreifen, aus der Aufnahmevorrichtung 100 entnehmen und an eine weitere (nicht dargestellte) Vorrichtung, beispielsweise eine Verpackungsvorrichtung, übergeben werden.

Um die Kippeinheit 120 in einfacher Weise wieder in die liegende Kippstellung zurückführen zu können, kann das Kippscharnier 102 beispielsweise mit einer (nicht dargestellten) Rückstellfeder ausgestattet sein, welche die Rückführung in die liegende Kippstellung einleitet, sobald der Eingriff von Eingriffselement 128 und Gegeneingriffselement 202 aufgehoben worden ist.

## Patentansprüche

**1.** Aufnahmevorrichtung (100) für den Transport wenigstens eines nicht zur Aufnahmevorrichtung gehörenden Objekts (O), wobei die Aufnahmevorrichtung (100) eine Basiseinheit (110) umfasst mit einem Bodenabschnitt (112), dessen Unterseite (112a) zur Befestigung auf einem nicht zur Aufnahmevorrichtung gehörenden Mover (M) einer ebenfalls nicht zur Aufnahmevorrichtung gehörenden Fördervorrichtung (F) vorbereitet ist, sowie zwei Wandabschnitten (114, 116), die von zwei einander gegenüberliegenden Seitenrändern (112b, 112c) des Bodenabschnitts (112) ausgehend von einer von der Unterseite (112a) des Bodenabschnitts (112) abgewandten Seite des Bodenabschnitts (112) abstehen.
**dadurch gekennzeichnet, dass** die Aufnahmevorrichtung (100) ferner eine Kippeinheit (120) umfasst, die an der Basiseinheit (110) mittels eines Kippscharniers (102) um eine Kippachse (K) zwischen einer liegenden Kippstellung und einer stehenden Kippstellung kippbar angelenkt ist, welche im Wesentlichen orthogonal zu den Wandabschnitten (114, 116) der Basiseinheit (112) verläuft,
wobei die Kippeinheit (120) einen Stützabschnitt (122) umfasst, der sich in der liegenden Stellung im Wesentlichen parallel zum Bodenabschnitt (112) der Basiseinheit (110) erstreckt, sowie zwei Halteabschnitte (124, 126), die sich unabhängig von der jeweiligen Kippstellung im Wesentlichen orthogonal zu den Wandabschnitten (114, 116) der Basiseinheit (110) erstrecken.

**2.** Aufnahmevorrichtung nach Anspruch 1,
**dadurch gekennzeichnet, dass** an einem freien Ende des von der Kippachse (K) entfernt angeordneten Halteabschnitts (126) ein Eingriffselement (128) vorgesehen ist.

**3.** Aufnahmevorrichtung nach Anspruch 1 oder 2,
**dadurch gekennzeichnet, dass** die Kippeinheit (120) wenigstens eine Durchbrechung, vorzugsweise wenigstens zwei Durchbrechungen (122d), aufweist, welche von einem freien Ende des von der Kippachse (K) entfernt angeordneten Halteabschnitts (126) ausgeht und sich bis in den Stützabschnitt (122) erstreckt, vorzugsweise bis zu einem der Kippachse (K) benachbarten Ende des Stützabschnitts (122).

**4.** Aufnahmevorrichtung nach einem der Ansprüche 1 bis 3,
**dadurch gekennzeichnet, dass** dem Kippscharnier (102) eine Rückstellfeder, beispielsweise eine Drehfeder, oder ein pneumatisches und/oder elektromotorisches Kraftgerät zugeordnet ist.

**5.** Aufnahmevorrichtung nach Anspruch 3 oder 4,
**dadurch gekennzeichnet, dass** der Bodenabschnitt (112) der Basiseinheit (110) an einer zu der wenigstens einen Durchbrechung (122d) der Kippeinheit (120) korrespondierenden Stelle eine Stützrippe (112d) aufweist, welche in der liegenden Kippstellung der Kippeinheit die wenigstens eine Durchbrechung (122d) im Wesentlichen ausfüllt.

**6.** Kombination einer Aufnahmevorrichtung (100) nach einem der vorhergehenden Ansprüche mit einer Hilfsvorrichtung (200).

**7.** Kombination nach Anspruch 6,
**dadurch gekennzeichnet, dass** die Hilfsvorrichtung (200) ein Gegeneingriffselement (202) aufweist, das dazu ausgebildet und bestimmt ist, mit dem Eingriffselement (128) der Kippeinheit (120) der Aufnahmevorrichtung (100) in Eingriff zu treten.

**8.** Kombination nach Anspruch 6 oder 7,
**dadurch gekennzeichnet, dass** die Hilfsvorrichtung (200) eine Anlageeinheit (210) umfasst, welche an der Hilfsvorrichtung (200) um eine Schwenkachse (S1) schwenkbar angelenkt und dazu ausgebildet und bestimmt ist, sich gegen ein in der Aufnahmevorrichtung (100) aufgenommenes Objekt (O) oder einen in der Aufnahmevorrichtung aufgenommenen Objektstapel anzulegen.

**11.** Kombination nach Anspruch 10,
**dadurch gekennzeichnet, dass** die Hilfsvorrichtung (200) eine weitere Anlageeinheit (220) umfasst, welche an der Hilfsvorrichtung (200) um eine weitere Schwenkachse (S2) schwenkbar angelenkt und dazu ausgebildet und bestimmt ist, sich durch die wenigstens eine Durchbrechung (122d) der Kippeinheit (120) hindurchzubewegen.

**12.** Kombination nach den Ansprüchen 10 und 11,
**dadurch gekennzeichnet, dass** die Anlageeinheit (210) und die weitere Anlageeinheit (220) dazu ausgebildet und bestimmt sind, ein in der Aufnahmevorrichtung (100) aufgenommenes Objekt (O) oder einen in der Aufnahmevorrichtung aufgenommenen Objektstapel zu ergreifen.
